# EUROPEAN PATENT APPLICATION

(11) **EP 3 193 061 A1**
(43) Date of publication of application: **19.07.2017**
(21) Application number: 16151406.2
(22) Date of filing: 15.01.2016
(51) Int. Cl.: F16K 41/04, F16K 43/00, F16K 1/52, F24D 19/10, F16K 27/02

(54) **VALVE, IN PARTICULAR HEAT EXCHANGER VALVE**

(71) Applicant: Danfoss A/S, 6430 Nordborg (DK)
(72) Inventor: Clausen, Anders Østergaard, 8680 Ry (DK)
(74) Representative: Knoblauch, Andreas

(57) **Abstract**

A valve, in particular a heat exchanger valve (1), is described comprising a housing arrangement (2, 5, 6, 7), a valve element (10) within said housing arrangement (2, 5, 6, 7), stuffing box means (14) comprising a stuffing box housing (15) and being connected to said housing arrangement (2, 5, 6, 7), and a pin (12) acting on said valve element (10). In such a heat exchanger valve the risk of sticking of the pin in the stuffing box means should be reduced. To this end said stuffing box housing (15) is made of a plastic material.

## Description

The present invention relates to a valve, in particular a heat exchanger valve comprising a housing arrangement, a valve element within said housing arrangement, stuffing box means comprising a stuffing box housing and being connected to said housing arrangement, and a pin acting on said valve element.

Such a heat exchanger valve is used to control a flow of heating fluid through a heat exchanger, for example a radiator or a floor heating piping.

The flow is controlled by the position of the valve element. When, for example, the valve element cooperates with a valve seat, a larger distance between the valve element and the valve seat allows a large flow of heating fluid, whereas a short distance between the valve element and the valve seat reduces the flow.

In order to control the position of the valve element from the outside, the pin is used. In many cased, the pin can be actuated by means of an actuator, for example a thermostat actuator.

Heating fluid entering the housing arrangement reaches the inner side of the stuffing box. The stuffing box is used to establish a seal so that the heating fluid cannot escape to the outside.

In some cases it can be observed that after a longer period of non-heating, for example during the summertime, the pin sticks in the stuffing box means so that a certain force is necessary to move the pin again in the stuffing box. In some cases a mechanical force is necessary to remove the materials which give the sticking effect (corrosion or oxidation material).

The object underlying the invention is to reduce the risk of sticking of the pin in the stuffing box means.

This object is solved with a heat exchanger valve as described at the outset in that said stuffing box housing is made of a plastic material.

When a stuffing box housing of a plastic material is used, the formation of a galvanic element with two metal parts, i.e. the pin and the stuffing box housing and a liquid can be prevented. Therefore, the risk of a corrosion between the metal pin and the stuffing box housing is dramatically reduced. It is assumed that such a corrosion is a main reason for the sticking of the pin in the stuffing box means.

Preferably said pin is made of metal. A pin of metal has a specific risk to stick when it is used in connection with other parts of metal since the metal parts together with a liquid fluid form a galvanic element. The present invention has advantages in particular when using a metal pin.

In another preferred embodiment said pin is made of a plastic material or ceramic. In this case the risk of sticking is reduced almost to zero.

Preferably said stuffing box housing is molded. When a plastic material is used, the forming of the stuffing box housing is simplified. The stuffing box housing can, for example, be formed by injection molding. This has the additional advantage that the production costs for the stuffing box housing and for the whole heat exchanger valve can be kept low. As a rule, plastic material is cheaper than metal material. Furthermore, production steps, like machining, can be omitted.

Preferably, a low friction plastic material is positioned between said pin and said stuffing box housing. Such a low friction material has two effects. The risk of sticking of the pin within the stuffing box housing is reduced. The friction between the pin and the stuffing box housing is reduced as well so that an actuator acting on the pin in order to control the position of the valve element within the housing arrangement can more directly control this position.

Preferably, said low friction plastic material is polytetrafluorethylene. Polytetrafluorethylene can easily be applied in the respective region between the pin and the stuffing box housing and gives the desired low friction between the pin and the stuffing box housing.

Preferably, said stuffing box means are connected to said housing arrangement by means of a thread-free connection. When the stuffing box housing is made of a plastic material, there is the risk that the stuffing box housing will flow under heat and elevated temperature. In this case a thread connection would have the risk to become loose. When a thread-free connection is used, this risk is reduced.

Preferably, said connection is in form of a bajonett-connection. In a bajonett-connection the stuffing box means are inserted axially, i.e. parallel to the lengthwise direction of the pin, into the housing arrangement until a predetermined position is reached. Thereafter, the stuffing box means are rotated over a predetermined angle and the connection is established. Such a bajonett-connection can be established without using a tool.

In another preferred embodiment said connection comprises a spring ring. In this case the stuffing box means comprises a circumferentially running groove on the radial outside and the housing arrangement comprises a circumferentially running groove on a radial inside. The spring ring can be mounted, for example, in the groove of the stuffing box means. It is compressed for mounting so that it has the same outer diameter as the stuffing box means. When the two grooves of the stuffing box means and of the housing arrangement overlap each other the spring ring expands and fills both grooves partly. Such a connection can be established without a tool as well.

Preferably, an outer sealing ring is positioned between said stuffing box means and said housing arrangement. When a thread-free connection is used for connecting the stuffing box means and the housing arrangement, the sealing ring simplifies the forming of a fluid tight connection between the stuffing box means and the housing arrangement.

Furthermore, it is preferable that an inner sealing ring is positioned between said pin and said stuffing box housing. This inner sealing ring blocks a fluid path along the pin.

Preferably, said pin is provided with a stop. Such a stop prevents movement of the pin out of the stuffing box means in a direction out of the housing arrangement.

In a preferred embodiment said pin comprises a diameter enlargement forming said stop. In this case, the pin can be made of one piece.

In another preferred embodiment a ring is fixed to said pin forming said stop. In this case, the pin needs less material.

Preferred examples of the invention will now be described in more detail with reference to the drawing, wherein:
- Fig. 1: shows a sectional view of a heat exchanger valve,
- Fig. 2: shows an enlarged view of stuffing box means according to Fig. 1, and
- Fig. 3: shows an enlarged view of stuffing box means of another embodiment and
- Fig. 4: shows another embodiment of a pin and of stuffing box means.

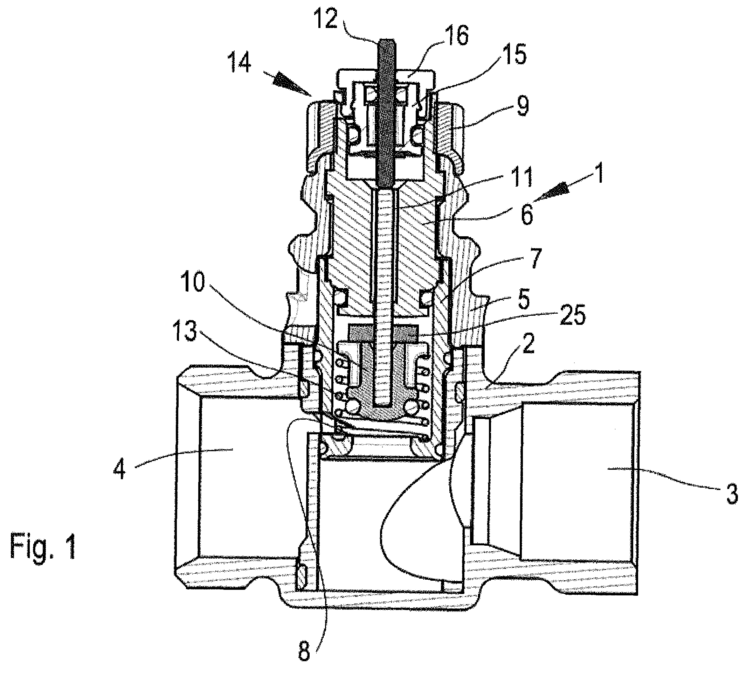

Fig. 1 shows a sectional view of a heat exchanger valve 1 comprising a valve housing 2. The valve housing comprises an inlet 3 and an outlet 4.

A valve top 5 is connected to the valve housing 2. An insert 6 is located within valve top 5. Insert 6 is rotatably fixed to a presetting element 7 defining a valve seat 8. Insert 6 can be rotated within valve top 5 by means of a handle 9. In order to simplify the description, the valve housing 2, valve top 5, insert 6 and presetting element 7 are together named "housing arrangement". The housing arrangement can include more or less than the named parts.

A valve element 10 is located within said housing arrangement, more precisely within the presetting element 7. The valve element 10 is connected to a valve stem 11 which in term cooperates with a pin 12.

The valve element 10 is loaded by a spring 13 in a direction away from the valve seat 8 and towards pin 12.

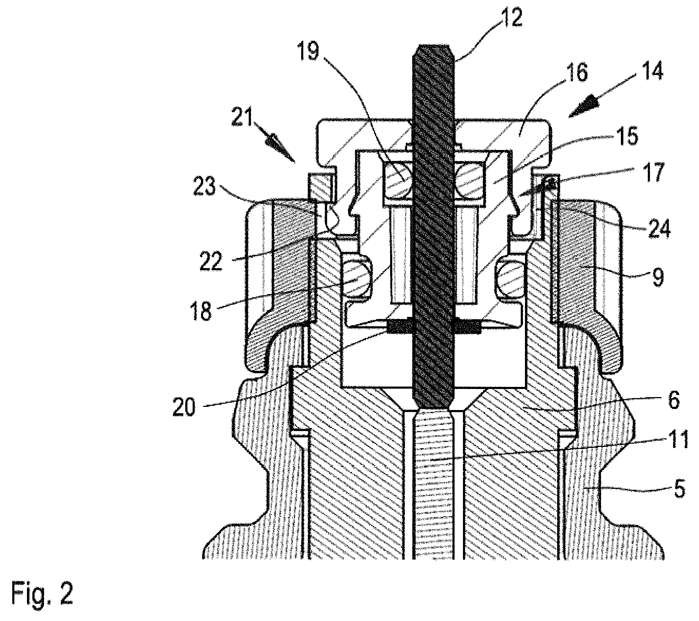

The pin 12 is slidingly accommodated in stuffing box means 14. In the embodiment shown in Fig. 1 stuffing box means 14 comprise a stuffing box housing 15 and a stuffing box holder 16. As can be seen in Fig. 2, the stuffing box housing 15 and the stuffing box holder 16 are connected to each other by means of a snap connection 17.

The stuffing box housing 15 is made of a plastic material. The stuffing box holder 16 can be made of a plastic material as well. The pin 12 is made of a metal. However, it can be made of a plastic or ceramic material as well.

An outer sealing ring 18 is positioned between said stuffing box housing 15 and the insert 6 forming part of the housing arrangement. An inner sealing ring 19 is located between the stuffing box housing 15 and the pin 12.

The pin 12 comprises a stop 20 in form of a disc clipsed on pin 12 preventing a movement of pin 12 out of the stuffing box means 14 in a direction away from the valve seat 8.

In the embodiment shown in Fig. 1 and 2 the stuffing box means 14 are connected to insert 6 by means of a bajonett-connection 21. In the present form this bajonett-connection 21 comprises a protrusion 22 at the stuffing box means 14 and a recess 23 at the insert 6. Of course, a number of protrusions 23 are provided in circumferential direction of the stuffing box means 14. The protrusion 22 can be moved into the position shown via an axial slot 24 (shown for another protrusion). Thereafter the stuffing box means 14 are rotated relative to the insert 6 to bring the protrusion 22 into engagement with the recess 23. In this way a connection between the stuffing box means 14 and the insert 6 can be established without using a thread.

Other thread-free connections are possible. It is, for example, possible, to arrange the protrusions 22 at a radial inside of the insert 6 and the recess 23 at a radial outside of the stuffing box mean.

Furthermore, it is possible to use a spring ring (not shown) and two matching grooves, namely one groove in the insert 6 and one groove in the stuffing box means 14. A spring ring can, for example, be arranged in the ring groove of the stuffing box means 14 and be compressed. In the compressed state of the spring ring it is possible to insert the stuffing box means into the insert 6. The spring ring expands when the two grooves are in overlapping relation to each other.

Furthermore, it is possible to use a number of balls distributed in circumferential direction of the insert 6 provided that the stuffing box means 14 have corresponding recesses or a circumferentially running groove. When the stuffing box means 14 are inserted into the insert 6, the balls can be pressed radially inwardly to establish a connection between the stuffing box means 14 and the insert 6. The balls can be moved, for example, by means of a ring like the handle 9, for example by turning such a ring or by moving such a ring axially.

As can be seen in Fig. 1 a sealing element 25 is located between the valve element 10 and insert 6. When the stuffing box means 14 are removed out of insert 6, for example for replacing the stuffing box means 14, the spring 13 presses the sealing means 25 against insert 6 to establish a tight sealing and to prevent an escape of heating fluid to the outside.

In the embodiment shown in Fig. 1 and 2 the stuffing box means 14 comprise a stuffing box holder 16 which is used to establish the connection between the stuffing box means 14 and the insert 6.

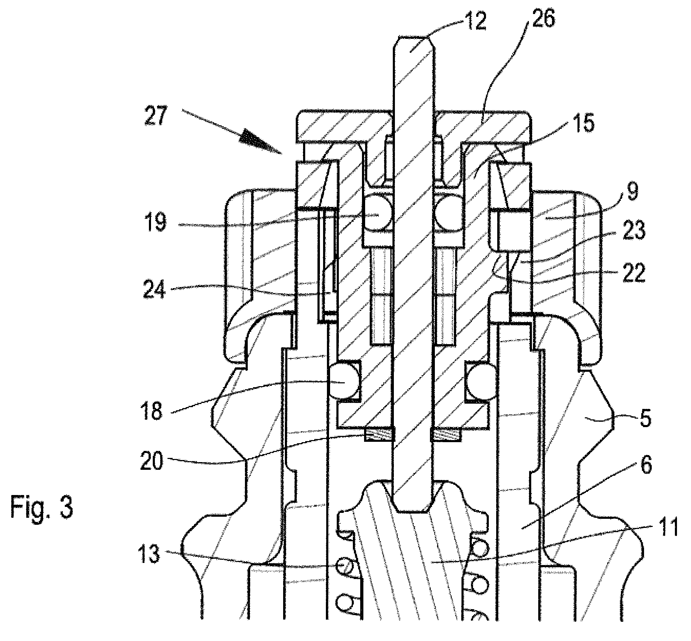

Fig. 3 shows another embodiment in which the same elements as shown in Fig. 1 and 2 are designated with the same numerals.

In this embodiment the stuffing box housing 5 forms directly the bajonett-connection with the insert 6, i. e. the protrusion 22 is part of the stuffing box housing 15. The stuffing box housing 15 is closed with a lid 26 and connected to the stuffing box housing by means of a snap connection 27.

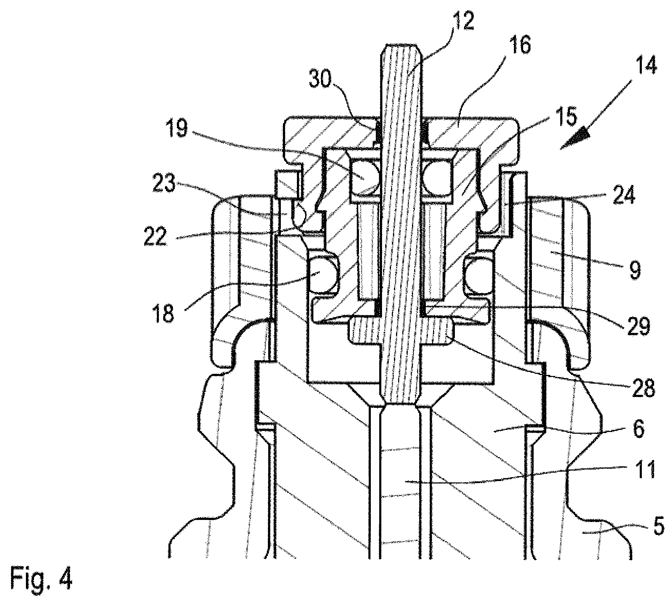

Fig. 4 shows a further embodiment of stuffing box means 14 with a slightly modified pin 12.

Pin 12 comprises a section 28 having an enlarged outer diameter. This section is shown in form of a disk. However, it is possible to use a section 28 with a larger diameter with a greater length. It is possible to extend the section 28 down to the valve stem 11.

Furthermore, the stuffing box housing 15 is provided with a friction reducing material 30, for example polytetrafluorethylene, in a region in which the pin 12 contacts the stuffing box housing 15. A similar friction reducing plastic material 29 can be used in a region between the pin 12 and the stuffing box housing 16.

## Claims

1. Valve, in particular heat exchanger valve (1) comprising a housing arrangement (2, 5, 6, 7), a valve element (10) within said housing arrangement (2, 5, 6, 7), stuffing box means (14) comprising a stuffing box housing (15) and being connected to said housing arrangement (2, 5, 6, 7), and a pin (12) acting on said valve element (10), **characterized in that** said stuffing box means (14) are made of a plastic material.

2. Valve according to claim 1, **characterized in that** said pin (12) is made of metal.

3. Valve according to claim 1, **characterized in that** said pin (12) is made of a plastic material or ceramic.

4. Valve according to any of claims 1 to 3, **characterized in that** said stuffing box housing (15) is molded.

5. Valve according to any of claims 1 to 4, **characterized in that** a low friction plastic material (29, 30) is positioned between said pin (12) and said stuffing box means (14).

6. Valve according to claim 5, **characterized in that** said low friction plastic material (29, 30) is polytetrafluorethylene.

7. Valve according to any of claims 1 to 6, **characterized in that** said stuffing box means (14) are connected to said housing arrangement (2, 5, 6, 7) by means of a thread-free connection.

8. Valve according to claim 7, **characterized in that** said connection is in form of a bajonett-connection (21).

9. Valve according to claim 7, **characterized in that** said connection comprises a spring ring.

10. Valve according to any of claims 1 to 9, **characterized in that** said an outer sealing ring (18) is positioned between said stuffing box means (14) and said housing arrangement (2, 5, 6, 7).

11. Valve according to any of claims 1 to 10, **characterized in that** an inner sealing ring (19) is positioned between said pin (12) and said stuffing box housing (15).

12. Valve according to any of claims 1 to 11, **characterized in that** said pin (12) is provided with a stop (20, 27).

13. Valve according to claim 12, **characterized in that** said pin (12) comprises a diameter enlargement (27) forming said stop.

14. Heat exchanger valve according to claim 12, **characterized in that** a ring (20) is fixed to said pin (12) forming said stop.
